# EUROPÄISCHE PATENTSCHRIFT

(11) **EP 3 942 181 B1**
(45) Veröffentlichungstag und Bekanntmachung des Hinweises auf die Patenterteilung: **14.05.2025**
(21) Anmeldenummer: 20717097.8
(22) Anmeldetag: 19.03.2020
(51) Int. Cl.: F04B 15/02, F04B 17/06, F04B 53/16, F04B 9/109, F04B 17/03, F04B 17/05, F04B 53/08

(54) **MOBILE DICKSTOFFPUMPE**
MOBILE THICK MATTER PUMP
POMPE MOBILE POUR LIQUIDE ÉPAIS

(30) Priorität: 19.03.2019 DE 102019107006
(43) Veröffentlichungstag der Anmeldung: 26.01.2022
(73) Patentinhaber: Schwing GmbH, 44653 Herne (DE)
(72) Erfinder: RABSAHL, Rudolf, 44339 Dortmund (DE); STREIER, Boris, 45659 Recklinghausen (DE)
(74) Vertreter: Schneiders & Behrendt Bochum
(86) Internationale Anmeldenummer: PCT/EP2020/057601
(87) Internationale Veröffentlichungsnummer: WO 2020/188030

(56) Entgegenhaltungen:
- US-A- 3 807 706
- US-A- 4 298 288
- US-A- 4 527 959
- US-A- 4 616 979

## Beschreibung

Die Erfindung betrifft eine mobile Dickstoffpumpe zur Förderung von Dickstoff, mit einem Anhängerfahrgestell, einer an dem Anhängerfahrgestell angeordneten, als Zweizylinderkolbenpumpe ausgebildeten Pumpeinheit und einem an dem Anhängerfahrgestell angeordneten Antriebsmotor, welcher die Pumpeinheit zur Förderung von Dickstoff antreibt.

Die US 4 527 959 A betrifft eine Pumpe zum Spülen von Bohrlöchern, die auf einem Anhänger aufgebaut ist.

Die US 4 616 979 A betrifft hingegen ein mobiles Pumpsystem zum Pumpen von Wasser aus Bewässerungsgräben und dergleichen.

Die US 3 807 706 A offenbart eine mobile Dickstoffpumpe zur Förderung von Beton, mit einem Anhängerfahrgestell, einer an dem Anhängerfahrgestell angeordneten Pumpeinheit, die über einen rückseitig am Anhängerfahrgestell angeordneten Aufgabetrichter mit zu förderndem Dickstoff versorgt wird, und einem an dem Anhängerfahrgestell angeordneten Antriebsmotor, welcher die Pumpeinheit zur Förderung von Dickstoff antreibt.

Die US 4 298 288A betrifft eine mobile Dickstoffpumpe zur Förderung von Dickstoff, mit einem Anhängerfahrgestell, einer an dem Anhängerfahrgestell angeordneten, als Zweizylinderkolbenpumpe ausgebildeten Pumpeinheit, und einem an dem Anhängerfahrgestell angeordneten Antriebsmotor, welcher die Pumpeinheit zur Förderung von Dickstoff antreibt, wobei die Pumpeinheit außermittig, d.h. gegenüber der Längsmittelebene des Anhängerfahrgestells in einer ersten Richtung seitlich versetzt an dem Anhängerfahrgestell angeordnet ist, während der Antriebsmotor ebenfalls außermittig, und zwar gegenüber der Längsmittelebene in einer der ersten Richtung entgegengesetzten zweiten Richtung seitlich versetzt an dem Anhängerfahrgestell angeordnet ist.

Weitere aus dem Stand der Technik bekannte, auf einem Anhänger aufgebaute Dickstoffpumpen weisen üblicherweise eine Pumpeinheit bestehend aus zwei hydraulischen Antriebszylindern, einem Wasserkasten, zwei Förderkolben und einem Rohrweichengehäuse mit der Rohrweiche auf, die zentral in Fahrtrichtung, also in Längsrichtung, des Anhängerfahrgestells über der Radachse montiert ist. Derartige Zweizylinder-Kolbenpumpen werden bevorzugt zur Betonförderung eingesetzt. Bei der Pumpeinheit zur Förderung von Dickstoffen kann es sich aber beispielsweise um eine Einzylinderkolbenpumpe, eine Schneckenpumpe, eine Rotorpumpe oder ähnliches handeln. Der Antriebsmotor, welcher die Pumpeinheit zur Förderung von Dickstoff antreibt, ist üblicherweise darüber angeordnet. Diese Anordnung hat zwei wesentliche Nachteile. So befindet sich zum einen der Schwerpunkt des Anhängers hoch über der Radachse des Fahrgestells, was ein instabiles Fahrverhalten des unter Umständen über zwei Tonnen schweren Anhängers zur Folge hat. Zum anderen führt die Anordnung des Antriebsmotors über der Pumpeneinheit zu einer sehr schlechten Zugänglichkeit der Pumpeneinheit, insbesondere des Wasserkastens im Fall einer Zweizylinder-Kolbenpumpe, der aber für die Reinigung, das Auswechseln der Förderkolben usw. tatsächlich regelmäßig geöffnet werden muss.

Es ist daher Aufgabe der Erfindung, eine verbesserte Dickstoffpumpe anzugeben, die ein stabileres Fahrverhalten und einen kompakteren Aufbau ermöglicht. Insbesondere soll die Pumpeinheit einfach zugänglich sein und somit Wartungsarbeiten erleichtern.

Gelöst wird diese Aufgabe durch eine Dickstoffpumpe mit den Merkmalen des Anspruchs 1.

Dadurch, dass dass die Pumpeinheit außermittig, d.h. gegenüber der Längsmittelebene des Anhängerfahrgestells in einer ersten Richtung seitlich versetzt an dem Anhängerfahrgestell angeordnet ist, während der Antriebsmotor ebenfalls außermittig, und zwar gegenüber der Längsmittelebene in einer der ersten Richtung entgegengesetzten zweiten Richtung seitlich versetzt an dem Anhängerfahrgestell angeordnet ist, kann ein niedriger Schwerpunkt der mobilen Dickstoffpumpe erreicht werden, sodass ein stabileres Fahrverhalten ermöglicht wird. Mit der Anordnung der Pumpeinheit seitlich versetzt zur Fahrtrichtung des Fahrgestells und der seitlich daneben vorgesehenen Anordnung des Antriebsmotors lässt sich vorteilhaft ein kompakter Aufbau realisieren, der zudem eine hervorragende Zugänglichkeit für Wartungsarbeiten an der Pumpeinheit bietet. Durch die spezielle Anordnung von Pumpeinheit und Antriebsmotor ergibt sich ein sehr niedriger Schwerpunkt der Anhängerbetonpumpe und durch die Anordnung des Antriebsmotors neben der Pumpenbatterie und eine geeignete Anordnung der weiteren notwendigen Aggregate bleibt insbesondere der Wasserkasten der Pumpenbatterie für Wartungs- und Reparaturarbeiten sehr gut zugänglich.

Erfindungsgemäß ist vorgesehen, dass die Pumpeinheit als Zweizylinderkolbenpumpe ausgebildet ist. Eine solche Pumpeinheit eignet sich besonders zur Förderung von Dickstoffen und bietet einen kompakten Aufbau. Die Pumpeinheit wird bevorzugt mit zu förderndem Dickstoff über einen Aufgabetrichter versorgt, der rückseitig am Anhängerfahrgestell angeordnet ist.

Ferner ist erfindungsgemäß vorgesehen, dass die Pumpeinheit einen Wasserkasten aufweist, der von oben über einen über dem Wasserkasten gebildeten Freiraum für Wartungs- und Reparaturarbeiten zugänglich ist. Mit der Anordnung von Pumpeinheit und Antriebsmotor seitlich nebeneinander kann auf einfache Weise ein Freiraum über dem Wasserkasten der Pumpeinheit gebildet werden, über welchen der Wasserkasten leicht zugänglich ist. Hierdurch sind Wartungsarbeiten, wie die Reinigung des Wasserkastens und das Auswechseln von Förderkolben der Pumpeinheit, einfach möglich. Der Wasserkasten ist durch die seitliche Anordnung des Antriebsmotors besonders gut von oben für Wartungsarbeiten zugänglich. Dafür ist über dem Wasserkasten ein Freiraum gebildet. So lässt sich ein Deckel des Wasserkastens einfach entfernen und der Wasserkasten kann zur Reinigung gut geöffnet werden. Ferner ist der Wechsel von Förderkolben über den gut zugänglichen Wasserkasten einfach möglich.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß der Erfindung ist vorgesehen, dass die Pumpeinheit in Bezug auf die Längsmittelebene des Anhängerfahrgestells dem Antriebsmotor gegenüberliegend angeordnet ist. Mit der Anordnung der Pumpeinheit gegenüber dem Antriebsmotor kann ein Ausgleich des Schwerpunktes zur Mitte des Anhängerfahrgestells realisiert werden, dadurch dass die Massen von Pumpeinheit und Antriebsmotor sich zur Mitte des Anhängerfahrgestells in Fahrtrichtung ausgleichen. Hierdurch lässt sich ein stabiles Fahrverhalten des Anhängers insbesondere in Kurven realisieren.

Besonders bevorzugt ist eine Ausführungsform, die vorsieht, dass das Anhängerfahrgestell einen Aufbauraumen umfasst, wobei die Pumpeinheit und der Antriebsmotor an dem Aufbaurahmen nebeneinander aufgebaut sind. Mit dem Aufbau der Pumpeinheit neben dem Antriebsmotor kann der Aufbaurahmen sehr einfach ausgestaltet sein und einen tiefen Schwerpunkt für die mobile Dickstoffpumpe bieten. Vorteilhafterweise werden die Pumpeinheit und der Antriebsmotor auf den gleichen Querbalken des Aufbaurahmens montiert, sodass ein besonders leichter Aufbaurahmen mit wenigen Querbalken realisiert werden kann.

Eine vorteilhafte Ausführung der Erfindung sieht vor, dass der Antriebsmotor eine Hydraulikpumpe mechanisch antreibt, über welche die Pumpeinheit hydraulisch angetrieben ist. Über die Kopplung von Antriebsmotor und Pumpeinheit über die Hydraulikpumpe lassen sich mit der Pumpeinheit sehr einfach die für die Förderung von Dickstoffen erforderlichen Pumpdrücke realisieren.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: erfindungsgemäße Dickstoffpumpe,
- Figur 2: Dickstoffpumpe ohne Haube,
- Figur 3: Draufsicht auf Dickstoffpumpe,
- Figur 4: Anhängerfahrgestell mit Aufbaurahmen,
- Figur 5: Anhängerfahrgestell mit Aufbaurahmen und Pumpeinheit, und
- Figur 6: Anhängerfahrgestell mit Aufbaurahmen, Pumpeinheit und Antriebsmotor.

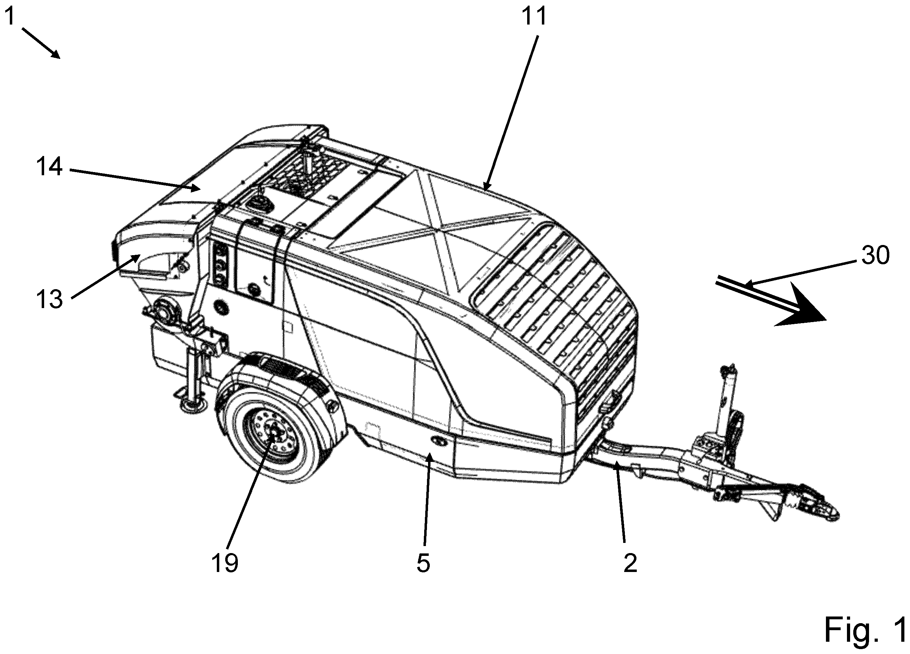

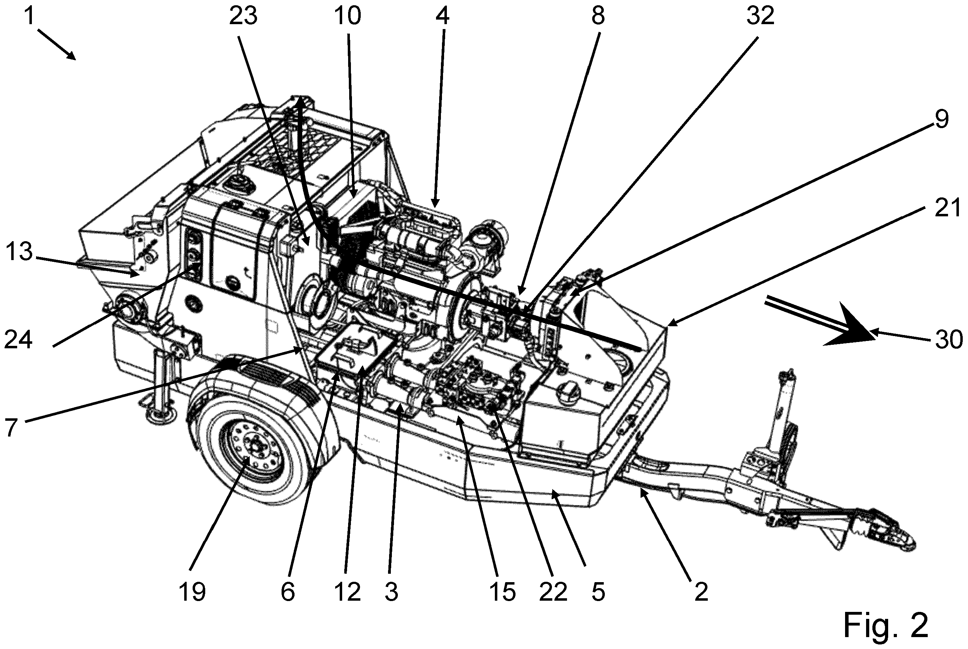

In der Figur 1 mit dem Bezugszeichen 1 bezeichnet ist eine erfindungsgemäße Dickstoffpumpe dargestellt. Die Dickstoffpumpe 1 weist ein Fahrgestell 2 eines Anhängers auf. Auf diesem Fahrgestell 2 ist ein Aufbaurahmen angeordnet, der mit einer Haube 11 abgedeckt ist. Unter der Haube 11 befindet sich eine an dem Anhängerfahrgestell 2 angeordnete Pumpeinheit 3 (Fig. 2) und ein an dem Anhängerfahrgestell 2 angeordneter Antriebsmotor 4 (Fig. 2), welcher die Pumpeinheit 3 (Fig. 2) zur Förderung von Dickstoff antreibt.

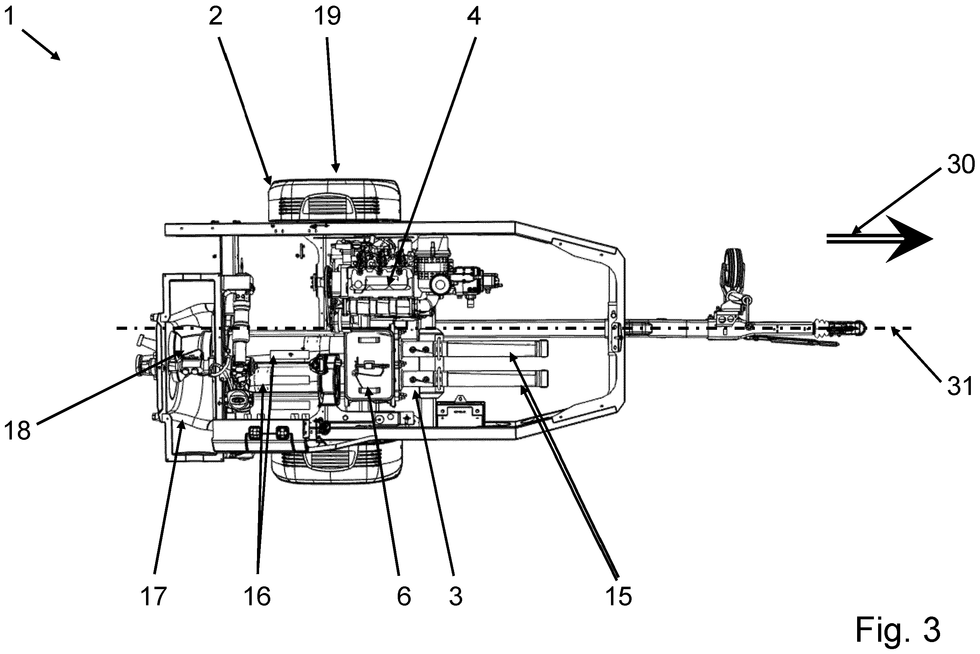

Diese Komponenten der Dickstoffpumpe 1 sind in Figur 2 besser zu erkennen, wo die Haube 11 (Fig. 1) entfernt ist. In Figur 2 ist zu sehen, dass die Pumpeinheit 3 in Fahrtrichtung 30 des Anhängerfahrgestells 2 gegenüber der Längsmittelebene des Anhängerfahrgestells 2 seitlich versetzt angeordnet ist, während der Antriebsmotor 4 in Fahrtrichtung 30 des Anhängerfahrgestells 2 seitlich neben der Pumpeinheit 3, d.h. in entgegengesetzter Richtung seitlich versetzt angeordnet ist. Während die vollständige Pumpeinheit 3 in Fahrtrichtung 30 rechts der Mitte 31 (Fig. 3) des Fahrgestells 2 angeordnet ist, befindet sich der Antriebsmotor 4 zur Mitte 31 (Fig. 3) des Fahrgestells 2 gegenüberliegend auf der in Fahrtrichtung 30 linken Seite des Fahrgestells 2. Auf diese Weise sind die Pumpeinheit 3 und der Antriebsmotor 4 auf dem Aufbaurahmen 5 nebeneinander angeordnet. Mit der Anordnung des Antriebsmotors 4 neben der in Fahrtrichtung 30 seitlich versetzten Pumpeinheit 3 ist die Pumpeinheit 3 für Wartungsarbeiten zugänglich. Die als Zweizylinderkolbenpumpe ausgebildete Pumpeinheit 3 verfügt über einen Wasserkasten 6 der durch die seitliche Anordnung des Antriebsmotors 4 besonders gut von oben für Wartungsarbeiten zugänglich ist. Hierzu ist über dem Wasserkasten 6 ein Freiraum 7 gebildet, der nach Abnahme der Haube 11 (Fig. 1) frei liegt. Hierdurch lässt sich der Deckel 12 des Wasserkastens 6 einfach entfernen und der Wasserkasten 6 kann zur Reinigung gut geöffnet werden. Auch der Wechsel von Förderkolben ist über den gut zugänglichen Wasserkasten 6 einfach möglich. Der Antriebsmotor 4, der als Verbrennungsmotor oder Elektromotor ausgebildet sein kann, treibt eine Hydraulikpumpe 8 mechanisch an, über welche die Pumpeinheit 3 hydraulisch angetrieben ist. Die Dickstoffpumpe 1 verfügt zudem über einen Hydrauliktank 21, einen Hydrauliksteuerblock 22, der ebenfalls für Wartungs- und Einstellarbeiten gut zugänglich ist, einen Kraftstofftank 23 sowie einen Bedien- und Steuereinheit 24. Aus Gründen der Übersicht wird in den Figuren 2 bis 6 auf die Darstellung der selbstverständlich erforderlichen Hydraulikverschlauchungen zwischen Hydraulikpumpe 8 und Pumpeinheit 3 verzichtet. Die Pumpeinheit 3 wird mit zu förderndem Dickstoff über einen Aufgabetrichter 13 versorgt, der rückseitig am Anhängerfahrgestell 2 angeordnet ist. Der an der Rückseite des Anhängerfahrgestells 2 angeordnete Aufgabetrichter 13 verfügt über einen schwenkbaren Trichterdeckel 14, mit dem eine obere Einfüllöffnung des Aufgabetrichters 13 in einer Verschlussschwenkstellung verschlossen werden kann, wie in Figur 1 zu sehen.

In Fahrtrichtung 30 des Anhängerfahrgestells 2 vor der Pumpeinheit 3 und dem Antriebsmotor 4 ist ein luftgekühlter Hydraulikölkühler 9 angeordnet. Außerdem ist in Fahrtrichtung 30 des Anhängerfahrgestells 2 hinter dem Antriebsmotor 4 ein luftgekühlter Kühler 10 für den Antriebsmotor 4 angeordnet. Die Luftführung 32, welche als Pfeil angedeutet ist, durch die beiden Kühler 9, 10 entgegen der Fahrtrichtung des Anhängerfahrgestells 2 erfolgt so miteinander gekoppelt, dass die Kühlluft von dem Hydraulikölkühler 9 aus zumindest teilweise durch den Kühler 10 für den Antriebsmotor 4 geführt wird.

Gemäß Figur 3 ist eine Draufsicht auf die Dickstoffpumpe 1 gegeben, wobei einigen Komponenten der Dickstoffpumpe der Übersichtlichkeit halber nicht dargestellt sind. In dieser Darstellung ist ersichtlich, dass die Pumpeinheit 3 in Fahrtrichtung 30 des Fahrgestells 2 seitlich nach rechts der Fahrgestellmitte 31 versetzt ist, während der Antriebsmotor 4 in Fahrtrichtung 30 des Fahrgestells 2 seitlich nach links der Fahrgestellmitte 31 versetzt neben der Pumpeinheit 3 angeordnet ist. Die Pumpeinheit 3, bestehend aus zwei hydraulischen Antriebszylindern 15, dem Wasserkasten 6, zwei Förderkolben 16 und einem Rohrweichengehäuse 17 mit Rohrweiche 18 sind so seitlich versetzt zum Antriebsmotor 4, dass dieser zur strichpunktiert angedeuteten Fahrgestellmitte 31 ein Gegengewicht zur Pumpeinheit 3 bildet. Die Pumpeinheit 3 und der Antriebsmotor 4 sind zur Radachse 19 des Fahrgestells 2 ebenfalls austariert.

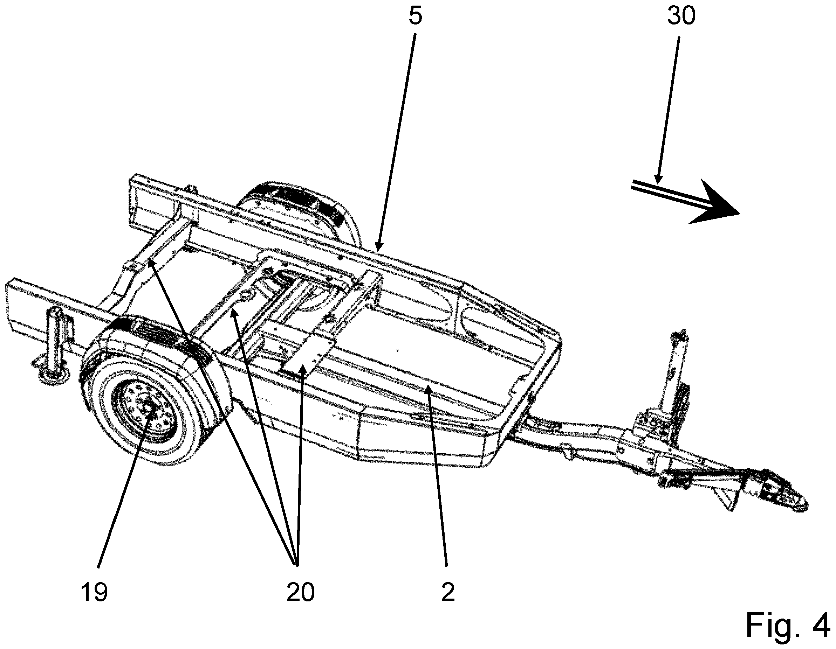

Die Figur 4 stellt eine Ansicht auf das Fahrgestell 2 mit darauf aufgebautem Aufbaurahmen 5 dar. Der Aufbaurahmen 5 verfügt über insgesamt drei innere Querbalken 20 auf denen der Antriebsmotor 4 und die Pumpeinheit 3 nebeneinander gelagert sind.

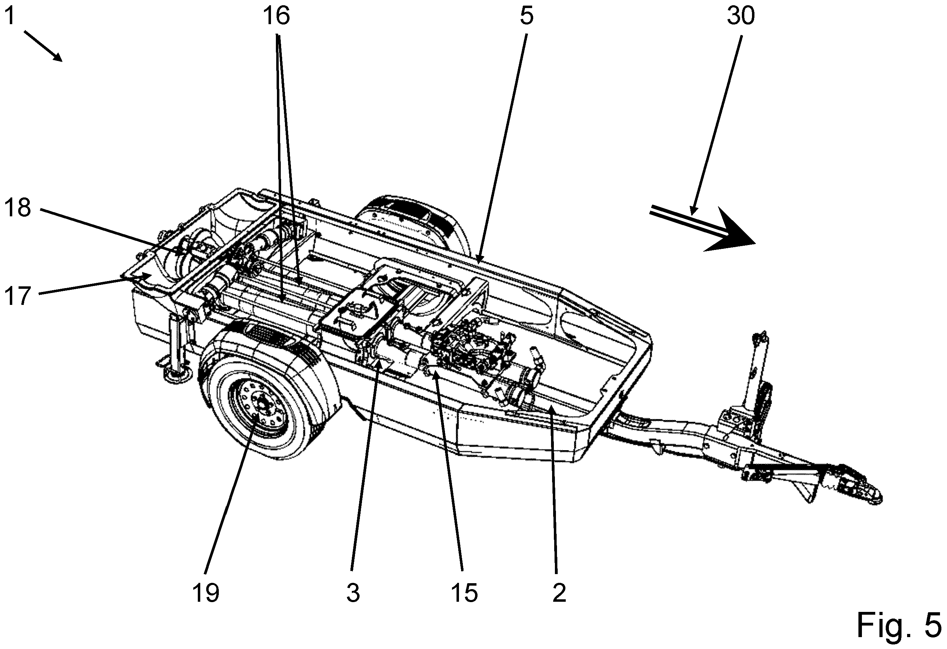

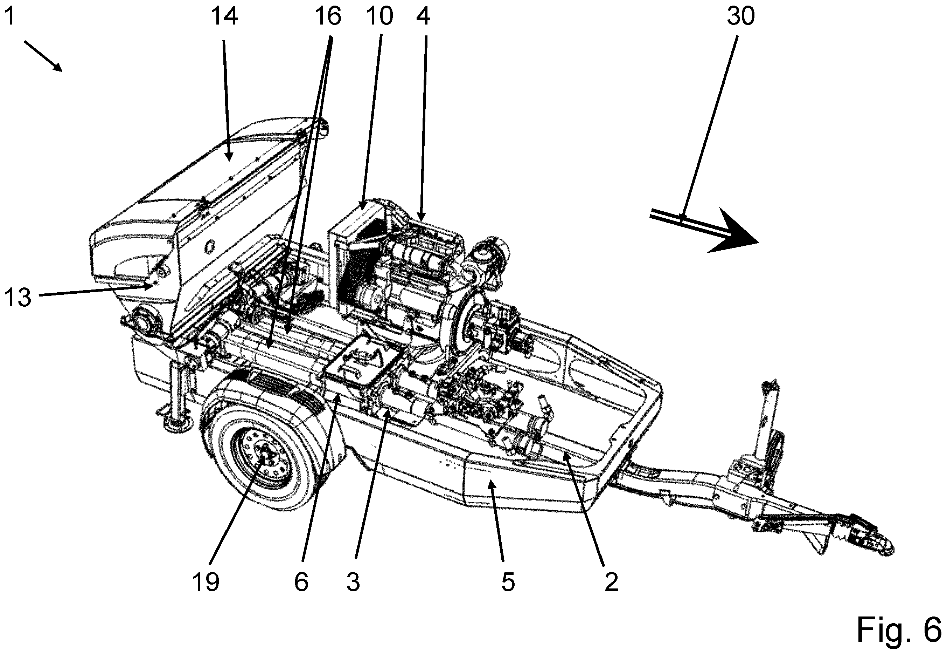

Mit der Figur 5 ist das Fahrgestell 2 gemäß Figur 4 gezeigt, wobei hier die Pumpeinheit 3 bereits auf dem Aufbaurahmen 5 montiert ist. Neben der Pumpeinheit 3 befindet sich ausreichend Platz um den Antriebsmotor 4 (Fig. 6) hier ebenfalls auf dem Aufbaurahmen 5 zu montieren.

Wie aus Figur 6 ersichtlich, ist der Antriebsmotor 4 erfindungsgemäß neben der Pumpeinheit 3 auf dem Aufbaurahmen 5 montiert, sodass ein kompakter Aufbau und eine gute Zugänglichkeit für Wartungsarbeiten gegeben ist.

Die Zweizylinder-Kolbenpumpe ist hier liegend dargestellt, das heißt, die zwei Pumpzylinder befinden sich nebeneinander. Denkbar wäre aber auch, die zwei Pumpzylinder beispielsweise übereinander anzuordnen.

### Bezugszeichenliste

1 Mobile Dickstoffpumpe
2 Anhängerfahrgestell
3 Pumpeinheit
4 Antriebsmotor
5 Aufbauraumen
6 Wasserkasten
7 Freiraum
8 Hydraulikpumpe
9 Hydraulikölkühler
10 Kühler für den Antriebsmotor
11 Haube
12 Deckel (Wasserkasten)
13 Aufgabetrichter
14 Trichterdeckel
15 Antriebszylinder
16 Förderkolben
17 Rohrweichengehäuse
18 Rohrweiche
19 Radachse
20 Querbalken
21 Hydrauliköltank
22 Hydrauliksteuerblock
23 Kraftstofftank
24 Bedien-/Steuereinheit
30 Fahrtrichtung
31 Mitte des Anhängerfahrgestells
32 Luftführung

## Patentansprüche

1. Mobile Dickstoffpumpe (1) zur Förderung von Dickstoff, mit
- einem Anhängerfahrgestell (2),
- einer an dem Anhängerfahrgestell (2) angeordneten, als Zweizylinderkolbenpumpe ausgebildeten Pumpeinheit (3), und
- einem an dem Anhängerfahrgestell (2) angeordneten Antriebsmotor (4), welcher die Pumpeinheit (3) zur Förderung von Dickstoff antreibt, wobei die Pumpeinheit (3) außermittig, d.h. gegenüber der Längsmittelebene des Anhängerfahrgestells (2) in einer ersten Richtung seitlich versetzt an dem Anhängerfahrgestell (2) angeordnet ist, während der Antriebsmotor (4) ebenfalls außermittig, und zwar gegenüber der Längsmittelebene in einer der ersten Richtung entgegengesetzten zweiten Richtung seitlich versetzt an dem Anhängerfahrgestell (2) angeordnet ist,
**dadurch gekennzeichnet,**
**dass** die Pumpeinheit (3) einen Wasserkasten (6) aufweist, wobei der Wasserkasten (6) durch die seitliche Anordnung des Antriebsmotors (4) von oben über einen hierzu über dem Wasserkasten (6) gebildeten Freiraum (7) für Wartungs- und Reparaturarbeiten zugänglich ist, so dass die Förderkolben (16) der Pumpeinheit (3) über den Wasserkasten (6) wechselbar sind, wobei der Freiraum (7) über dem Wasserkasten (6) die Entfernung eines Deckels (12) des Wasserkastens (6) ermöglicht, sodass der Wasserkasten (6) zur Reinigung geöffnet werden kann.

2. Dickstoffpumpe (1) nach Anspruch 1, **dadurch gekennzeichnet, dass** das Anhängerfahrgestell (2) einen Aufbaurahmen (5) umfasst, wobei die Pumpeinheit (3) und der Antriebsmotor (4) an dem Aufbaurahmen (5) nebeneinander angeordnet sind.

3. Dickstoffpumpe (1) nach einem der vorhergehenden Ansprüche, **dadurch gekennzeichnet, dass** der Antriebsmotor (4) eine Hydraulikpumpe (8) mechanisch antreibt, über welche die Pumpeinheit (3) hydraulisch angetrieben ist.

## Claims

1. A mobile thick matter pump (1) for conveying thick matter, comprising
- a trailer chassis (2),
- a pump unit (3) that is configured as a two-cylinder piston pump and is arranged on the trailer chassis (2), and
- a drive motor (4) that is arranged on the trailer chassis (2) and drives the pump unit (3) to convey thick matter, wherein the pump unit (3) is arranged off centre on the trailer chassis (2), i.e. laterally offset in a first direction relative to the longitudinal centre plane of the trailer chassis (2), while the drive motor (4) is also arranged off centre on the trailer chassis (2), and specifically laterally offset in a second direction, opposite to the first direction, relative to the longitudinal centre plane,
**characterised in that**
the pump unit (3) has a water box (6), wherein, owing to the lateral arrangement of the drive motor (4), the water box (6) is accessible from above for maintenance and repair work via a free space (7) formed for that purpose above the water box (6), such that the delivery pistons (16) of the pump unit (3) can be replaced via the water box (6), wherein the free space (7) above the water box (6) permits the removal of a cover (12) of the water box (6) so that the water box (6) can be opened for cleaning.

2. Thick matter pump (1) according to claim 1, **characterised in that** the trailer chassis (2) comprises a mounting frame (5), wherein the pump unit (3) and the drive motor (4) are arranged side by side on the mounting frame (5).

3. Thick matter pump (1) according to one of the preceding claims, **characterised in that** the drive motor (4) mechanically drives a hydraulic pump (8), via which the pump unit (3) is hydraulically driven.

## Revendications

1. Pompe mobile à matière épaisse (1) pour le transport de matière épaisse, avec
- un châssis de remorque (2),
- une unité de pompage (3) agencée sur le châssis de remorque (2), réalisée sous forme de pompe à piston à deux cylindres, et
- un moteur d'entraînement (4) agencé sur le châssis de remorque (2), qui entraîne l'unité de pompage (3) pour le transport de matière épaisse, l'unité de pompage (3) étant agencée sur le châssis de remorque (2) de manière excentrée, c'est-à-dire de manière décalée latéralement dans une première direction par rapport au plan médian longitudinal du châssis de remorque (2), tandis que le moteur d'entraînement (4) est également agencé sur le châssis de remorque (2) de manière excentrée, et ce de manière décalée latéralement par rapport au plan médian longitudinal dans une deuxième direction opposée à la première direction,
**caractérisée en ce que**
l'unité de pompage (3) présente une boîte à eau (6), la boîte à eau (6) étant accessible pour des travaux d'entretien et de réparation par l'agencement latéral du moteur d'entraînement (4) depuis le haut par le biais d'un espace libre (7) formé à cet effet au-dessus de la boîte à eau (6), de telle sorte que les pistons de transport (16) de l'unité de pompage (3) peuvent être remplacés par le biais de la boîte à eau (6), l'espace libre (7) au-dessus de la boîte à eau (6) permettant d'enlever un couvercle (12) de la boîte à eau (6), de telle sorte que la boîte à eau (6) peut être ouverte pour le nettoyage.

2. Pompe à matière épaisse (1) selon la revendication 1, **caractérisée en ce que** le châssis de remorque (2) comprend un cadre de montage (5), l'unité de pompage (3) et le moteur d'entraînement (4) étant agencés côte à côte sur le cadre de montage (5).

3. Pompe à matière épaisse (1) selon l'une quelconque des revendications précédentes, **caractérisée en ce que** le moteur d'entraînement (4) entraîne mécaniquement une pompe hydraulique (8) par le biais de laquelle l'unité de pompage (3) est entraînée hydrauliquement.
